Europäisches Patentamt

European Patent Office

Office européen des brevets

(11) Veröffentlichungsnummer: **0 317 792**
**A2**

(12) ## EUROPÄISCHE PATENTANMELDUNG

(21) Anmeldenummer: 88118066.5

(22) Anmeldetag: 29.10.88

(51) Int. Cl.⁴: **F16C 11/06**

(30) Priorität: 21.11.87 DE 3739463

(43) Veröffentlichungstag der Anmeldung:
31.05.89 Patentblatt 89/22

(84) Benannte Vertragsstaaten:
**DE ES FR GB IT SE**

(71) Anmelder: **Lemförder Metallwaren AG**
**Postfach 1220**
**D-2844 Lemförde(DE)**

(72) Erfinder: **Bohne, Manfred**
**Kniepenort 39**
**D-2844 Quernheim(DE)**
Erfinder: **Richter, Reinhard**
**An der Egge 6**
**D-4508 Bohmte(DE)**

(74) Vertreter: **Bruse, Willy Hans Heinrich**
**Edisonstrasse 14**
**D-2800 Bremen 33(DE)**

(54) **Hohl ausgebildeter Kugelkörper für Gelenke in Kraftfahrzeugen.**

(57) Der hohl ausgebildete Kugelkörper für Gelenke in Kraftfahrzeugen besteht aus zwei am Rand miteinander verschweißten Schalenteilen, die in der Äquatorebene des Kugelkörpers durch Reibschweißen miteinander verbunden sind. Vorzugsweise sind zwei im Fließpreßverfahren geformte Halbkugelschalen mit einem polseitigen Tragzapfen parallel zur Äquatorebene des Kugelkörpers durch Reibschweißen miteinander verbunden.

Fig. 1

EP 0 317 792 A2

## Hohl ausgebildeter Kugelkörper für Gelenke in Kraftfahrzeugen

Die Erfindung betrifft einen hohl ausgebildeten Kugelkörper für Gelenke in Kraftfahrzeugen, welcher aus zwei am Rand miteinander verschweißten Schalenteilen besteht.

Verwendung finden solche Kugelkörper vor allem in Gelenken zur Lagerung von Achsstreben und Dreiecklenkern. Ein Kugelkörper mit den genannten Gattungsmerkmalen ist aus dem DE-GM 69 48 501 bekannt. Die Schalenteile sind danach im Preß- oder Schmiedeverfahren herstellbar und mit einem Flanschrand versehen, der das Verbinden beider Schalenteile unter anderem durch elektrisches Punktschweißen oder autogenes Schweißen ermöglicht und gleichzeitig für die Anbringung der Befestigungsmittel genutzt wird. Solche Kugelstücke sind gegenüber Kugelstücken aus vollem Material erheblich leichter und in großen Stückzahlen billiger herzustellen. Allerdings ist die Belastbarkeit bei gleichen Außenabmessungen erheblich geringer, und Brüche der Schweißung führen zur Zerstörung des Gelenks. Hohle Kugelstücke aus schmiedbarem Material sind auch aus der DE-PS 33 32 771 bekannt.

Aufgabe der Neuerung ist es, eine Ausbildung für hohle Kugelstücke zu schaffen, deren Herstellungsaufwand mit modernen Arbeitstechniken weiter verringert werden kann, die sich aber vor allem durch eine hohe Belastbarkeit und Stabilität auszeichnen. Die Erfindung löst diese Aufgabe durch Ausbildungsmerkmale nach dem Kennzeichen des Patentanspruches 1.

Eine bevorzugte Ausführungsform sieht vor, daß zwei im Fließpreßverfahren geformte Halbkugelschalen mit einem polseitigen Lagerzapfen parallel zur Äquatorebene des Kugelkörpers durch Reibschweißen miteinander verbunden sind.

In aller Regel kann das mit Merkmalen der Erfindung ausgebildete und hergestellte Kugelstück ohne jede weitere Bearbeitung in einen Elastomerkörper eingesetzt und mit diesem in einem Gelenkgehäuse montiert werden. Ein Kugelstück mit Merkmalen der Erfindung ist vor allem auch für die Verwendung in hochbelasteten Gelenken besonders geeignet. Die Herstellung der Halbkugelschalen im Fließpreßverfahren und die Verbindung der beiden Halbkugelschalen durch Reibschweißung führt zu einem erheblichen Kostenvorteil.

Gegebenenfalls können die sich bei der Reibschweißung bildenden Schweißränder im gleichen Arbeitsgang geglättet oder entfernt werden. Ein anderer Vorschlag der Erfindung besteht darin, daß die Schweißränder der beiden Halbkugelschalen ein den Schweißrandwulst aufnehmendes Profil aufweisen. Gegebenenfalls können die Schweißränder auch so profiliert sein, daß der Schweißrandwulst bei der Reibschweißung nach innen abgedrängt wird.

Ein Ausführungsbeispiel der Erfindung ist auf der Zeichnung dargestellt. Es zeigen:

Figur 1 eine Seitenansicht eines Kugelstückes,

Figur 2 eine Halbkugelschale teilweise in Seitenansicht und teilweise im Schnitt,

Figur 3 einen Querschnitt durch den Schweißrand der Halbkugelschalen und

Figur 4 einen Querschnitt durch den Schweißrand mit nach innen abgeleitetem Schweißwulst.

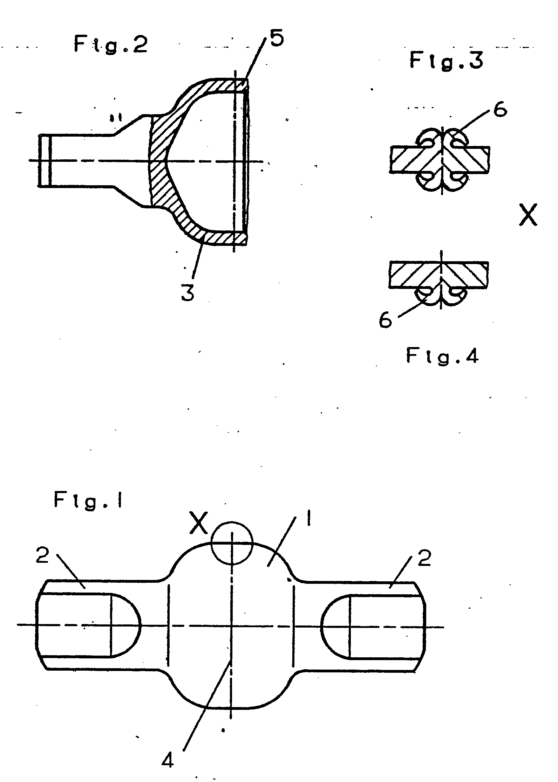

Das in Figur 1 als Ausführungsbeispiel dargestellte Kugelstück weist einen mittigen Kugelkörper 1 auf, der an den beiden Polseiten in sich axial gegenüberliegende Tragzapfen 2 übergeht. Der Kugelkörper 1 kann in seinem äquatorialen Bereich abgeflacht oder in Teilbereichen auch als Ellipsoid ausgebildet sein, wobei jedoch die Rotationssymetrie in der Polebene erhalten bleibt. Seine Herstellung erfolgt aus zwei Halbkugelschalen 3 oder annähernd halbkugelförmigen Schalen, die am Pol in den Tragzapfen 2 übergehen und im Fließpreßverfahren hergestellt sind. Zwei Halbkugelschalen 3 werden zur Bildung eines hohlen Kugelstückes mit ihrer offenen Randseite stumpf gegeneinander gestoßen und durch Reibschweißung miteinander verbunden, so daß die Verbindung der beiden Halbkugelschalen 3 in der Äquatorebene des Kugelstückes erfolgt, die in der Figur 1 mit 4 bezeichnet ist. Der bei dieser Reibschweißung entstehende Schweißwulst 6 entsprechend Figur 3 stört die Einbettung des Kugelstückes in einen Elastomerkörper bei der Verwendung in Molekulargelenken im allgemeinen nicht. Durch besondere Ausbildung des Schweißrandes 5 der Halbkugelschalen 3 kann jedoch auch erreicht werden, daß der Schweißwulst 6 entsprechend der Darstellung in Figur 4 ins Innere des Kugelstückes abgedrängt wird. Eine andere Möglichkeit besteht darin, den Schweißrand 5 so zu profilieren, daß der sich bildende Schweißwulst 6 innerhalb der Außenkontur des Kugelstückes verbleibt. Eine Bearbeitung des Kugelstückes zum Zwecke der Entfernung des Schweißwulstes 6 soll dadurch nicht ausgeschlossen werden. Eine solche Bearbeitung kann gegebenenfalls mit dem Schweißvorgang im gleichen Arbeitsgang erfolgen.

**Ansprüche**

1. Hohl ausgebildeter Kugelkörper für Gelenke in Kraftfahrzeugen, welcher aus zwei am Rand miteinander verschweißten Schalenteilen besteht, dadurch gekennzeichnet, daß die Schalenteile (3) in der Äquatorebene (4) des Kugelkörpers durch Reibschweißen miteinander verbunden sind.

2. Hohl ausgebildeter Kugelkörper nach Anspruch 1, dadurch gekennzeichnet, daß zwei im Fließpreßverfahren geformte Halbkugelschalen (3) mit einem polseitigen Tragzapfen (2) parallel zur Äquatorebene (4) des Kugelkörpers durch Reibschweißen miteinander verbunden sind.

3. Hohl ausgebildeter Kugelkörper nach den Ansprüchen 1 und 2, dadurch gekennzeichnet, daß die Schweißränder (5) der beiden Halbkugelschalen (3) ein den Schweißrandwulst (6) aufnehmendes Profil aufweisen.

4. Hohl ausgebildeter Kugelkörper nach den Ansprüchen 1 und 2, dadurch gekennzeichnet, daß die Schweißränder (5) der beiden Halbkugelschalen (3) ein den Schweißwulst (6) nach innen leitendes Profil aufweisen.

Fig.2

Fig.3

5

6

X

3

6

Fig.4

Fig.1

X

1

2

2

4